(19) Europäisches Patentamt
European Patent Office
Office européen des brevets

(11) **EP 4 542 825 A1**

(12) **EUROPEAN PATENT APPLICATION**
published in accordance with Art. 153(4) EPC

(43) Date of publication:
**23.04.2025 Bulletin 2025/17**

(21) Application number: 23826833.8

(22) Date of filing: **16.05.2023**

(51) International Patent Classification (IPC):
*H02J 5/40* (2016.01)       *B60L 5/00* (2006.01)
*B60L 53/122* (2019.01)     *B60M 7/00* (2006.01)
*H02J 7/00* (2006.01)       *H02J 50/12* (2016.01)
*H02J 50/90* (2016.01)

(52) Cooperative Patent Classification (CPC):
B60L 5/00; B60L 53/122; B60M 7/00; H02J 7/00;
H02J 50/12; H02J 50/40; H02J 50/90

(86) International application number:
**PCT/JP2023/018268**

(87) International publication number:
**WO 2023/248645 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2022 JP 2022099079
21.04.2023 JP 2023069851**

(71) Applicant: DENSO CORPORATION
**Kariya-city, Aichi 448-8661 (JP)**

(72) Inventors:
• **NAKAYASHIKI Yusei**
  **Kariya-city, Aichi 448-8661 (JP)**
• **TAKAHASHI Masaya**
  **Kariya-city, Aichi 448-8661 (JP)**
• **YAMAGUCHI Nobuhisa**
  **Kariya-city, Aichi 448-8661 (JP)**
• **YAMADA Hidetoshi**
  **Kariya-city, Aichi 448-8661 (JP)**
• **KANESAKI Masaki**
  **Kariya-city, Aichi 448-8661 (JP)**

(74) Representative: **TBK
Bavariaring 4-6
80336 München (DE)**

(54) **CONTACTLESS POWER TRANSMISSION SYSTEM, CONTACTLESS POWER SUPPLY SYSTEM, AND CONTACTLESS POWER SUPPLY METHOD**

(57)     A wireless power transmission system (200) includes a plurality of power transmission devices (50) capable of wirelessly transmitting electric power to a power reception device (30). The plurality of power transmission devices (50) is installed in an area in which a mobile object (20) is movable and each equipped with a power transmission coil (51) that wirelessly transmits electric power to the power reception device of the mobile object. There are provided main power lines (RFP) that supply to the plurality of power transmission devices alternating current (AC) power at a first voltage for use in power transmission, and a direct current (DC) power supply unit (60) that receives the AC power from the main power lines and outputs power at a second voltage that is lower than the first voltage and is used for control within each of the plurality of power transmission devices. This implements a wireless power transfer system with a simplified power supply for controlling the power transmission devices.

FIG.1

## Description

[Cross Reference to Related Application]

This application claims the benefit of priority from Japanese Patent Application No. 2022-99079 filed with the Japan Patent Office on June 20, 2022, and Japanese Patent Application No. 2023-69851 filed with the Japan Patent Office on April 21, 2023, the contents of each of which are incorporated herein by reference.

[Technical Field]

This disclosure relates to a technology for wireless power transmission.

[Background Art]

Conventionally, various wireless power transfer technologies have been proposed for supplying power to a mobile object in motion without contact with a road surface. For example, JP2017-51074A discloses a configuration of wireless power transfer, in which a mobile object is supplied with electric power via a power transfer transformer from primary feed lines on the road surface side. In this configuration, a number of power transmission devices are installed to the road surface on which the mobile object travels, and the power transmission device to be used is changed according to the location of the mobile object. In the following, the terms "contactless" and "wireless" are mostly exchangeable, and the terms "power supply" and "power transfer" are mostly exchangeable.

However, when attempting to control switching on and off of power transfer from such power transmission devices, specifically power transmitting coils, a power source for such control has to be provided. Thus, it is necessary to prepare feed lines not only for a main power source, but also for the power source for such control, which requires additional wirings and increases the man-hours required to install the power transmission devices.

[Summary of the Invention]

The present disclosure may be implemented according to the following aspects.

(1) A first aspect of the present disclosure provides a wireless power transmission system. This wireless power transmission system includes: a plurality of power transmission devices installed in an area of movement of a mobile object and each equipped with a power transmission coil that wirelessly transmits power to a power reception device of the mobile object; main power lines that supply to the plurality of power transmission devices alternating current (AC) power at a first voltage for use in power transmission;

a direct current (DC) power supply unit that receives the AC power from the main power lines and outputs power at a second voltage that is lower than the first voltage and is used for control within each of the plurality of power transmission devices.

(2) A second aspect of the present disclosure provides a wireless power transfer system. This wireless power transfer system includes: a power reception device comprising a power reception coil installed within a mobile object; a plurality of power transmission devices installed in an area of movement of the mobile object and each equipped with a power transmission coil that is magnetically coupled to the power reception coil of the power reception device to thereby wirelessly transmit power to the mobile object; main power lines that supply to the plurality of power transmission devices alternating current (AC) power at a first voltage for use in power transmission to the mobile object; and a direct current (DC) power supply unit that receives the AC power from the main power lines and outputs power at a second voltage that is lower than the first voltage and is used for control within the power transmission devices.

(3) A third aspect of the present disclosure provides a wireless power transfer method. This wireless power transfer method includes: supplying alternating current (AC) power at a first voltage to a plurality of power transmission devices in an area of movement of a mobile object via main power lines; a direct current (DC) power supply unit that receives supply of the AC power from the main power lines, outputting power at a second voltage that is lower than the first voltage and is an operating voltage of a control unit within the power transmission devices; at least one of the plurality of power transmission devices, with control of the control unit, using the AC power at the first voltage to supply high frequency AC power to a power transmission coil installed in the at least one of the plurality of power transmission devices; and wirelessly transmitting power via the power transmission coil to a power reception coil of a power reception device of the mobile object.

According to these aspects, the DC power at the second voltage can be used to control the power transmission devices, reducing the time and man-hours required to install the plurality of power transmission devices. The present disclosure may be implemented in various forms, for example, a method of designing a power transmission system as well as a power feeding device.

[Brief Description of the Drawings]

The above and other objects, features and advantages of the present disclosure will become more apparent from the following detailed description with reference to the accompanying drawings. The drawings are:

FIG. 1 is a schematic diagram of a wireless power transfer system including a power reception device according to one embodiment;

FIG. 2 is a block diagram illustrating a configuration of a main power supply device;

FIG. 3 is an illustration of the schematic configuration of a power transmission device and a power reception device;

FIG. 4 is a schematic diagram of a power transmission device;

FIG. 5A is a schematic diagram of the power reception device including a first power supply unit;

FIG. 5B is a schematic diagram illustrating another example configuration of the power reception device;

FIG. 6 is a circuit diagram illustrating a first example configuration of a DC power supply unit of the power transmission device and a second power supply unit of the power reception device;

FIG. 7 is a circuit diagram illustrating a second example configuration of the DC power supply unit and the second power supply unit;

FIG. 8 is a circuit diagram illustrating a third example configuration of the DC power supply unit and the second power supply unit;

FIG. 9 is a circuit diagram illustrating a fourth example configuration of the DC power supply unit and the second power supply unit;

FIG. 10 is a circuit diagram illustrating an example of a connection between the first power supply unit and the second power supply unit where the power reception device is equipped with an immittance filter;

FIG. 11 is a circuit diagram illustrating another example of a connection between the first power supply unit and the second power supply unit;

FIG. 12 is a circuit diagram illustrating another example of a connection between the first power supply unit and the second power supply unit;

FIG. 13 is a circuit diagram illustrating an example configuration in which outputs of the first power supply unit are shorted using the power source of the second power supply unit;

FIG. 14 is a circuit diagram illustrating another example configuration in which outputs of the first power supply unit are shorted using the power source of the second power supply unit;

FIG. 15 is a circuit diagram illustrating another example configuration in which outputs of the first power supply unit are shorted using the power source of the second power supply unit;

FIG. 16 is a schematic diagram illustrating a configuration of a power transmission device of a wireless power transfer system according to a fifth embodiment;

FIG. 17 a flowchart of an example of a power-on processing routine performed by a control device;

FIG. 18 is a timing diagram showing the operation of each part when powered on;

FIG. 19 is a flowchart of an example of a power-on processing routine performed by a control device according to a sixth embodiment;

FIG. 20 is a timing diagram showing the operation of each part when powered on;

FIG. 21 is a circuit diagram illustrating a detailed configuration of a power transmission device according to a seventh embodiment;

FIG. 22 is a circuit diagram illustrating an example circuit for outputting negative voltages in the DC power supply unit and the second power supply unit; and

FIG. 23 is a circuit diagram illustrating an example circuit for generating both positive and negative voltages in the DC power supply unit and the second power supply unit.

[Description of the Embodiments]

A. First Embodiment:

(A1) Overall Configuration of Wireless Power Transfer System:

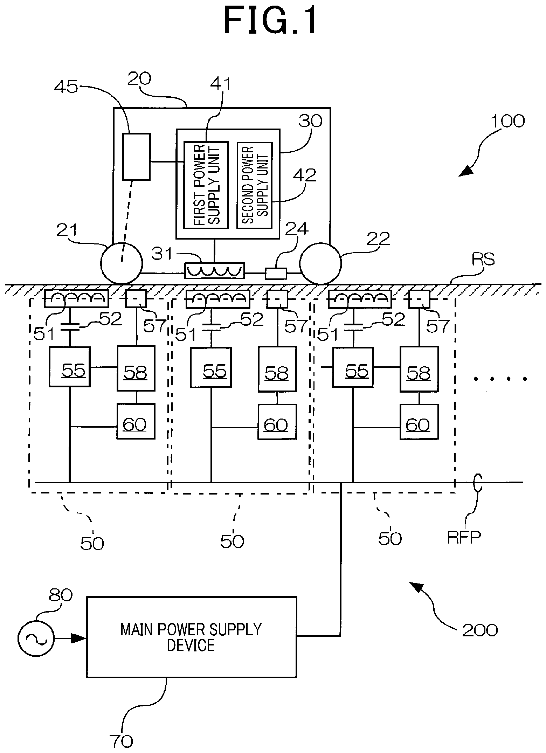

FIG. 1 illustrates the overall configuration of the wireless power transfer system 100, which includes power transmission devices 50 according to a first embodiment. As illustrated in FIG. 1, this wireless power transfer system 100 includes a plurality of power transmission devices 50 buried beneath a road surface RS, and a power reception device 30 mounted to a mobile object 20 that propels itself on the road surface RS. The mobile object 20 is equipped with driving wheels 21 to be driven by a motor (not shown) included in a load device 45, non-driving wheels 22 that support, together with the driving wheels 21, the mobile object 20 movably on the road surface RS, a power reception coil 31 disposed under the floor of the mobile object 20, and a magnet 24 also disposed under the floor of the mobile object 20. The power reception coil 31 is magnetically coupled to any one of the power transmission coils 51 of the power transmission device 50 provided on the road surface RS side to receive supplied AC power, which is converted into DC power by the first power supply unit 41 and the second power supply unit 42 provided in the power reception device 30. In particular, the first power supply unit 41 supplies electric power to the load device 45. The power supplied from the first power supply unit 41 is main power used by at least the mobile object 20. The second power supply unit 42 outputs DC power used to control the first power supply unit 41. In an alternative configuration to the configuration in which the power transmission devices 50 are buried beneath the road surface RS, they may also be installed on the road surface or on walls or ceilings. In such a configuration, the power reception device 30 may be disposed in a predefined position within the mobile object 20, corresponding to the installation positions of the power transmission devices 50. For example, in a case where the power transmission devices 50 are installed on a wall, the power reception device 30 may be disposed on one side of the mobile object 20. The power reception device 30 may be moved or displaced inside the mobile object 20 in accordance with the locations of the power transmission devices 50, or a plurality of power reception devices 30 may be prepared and switched to be used.

The plurality of power transmission devices 50 that supply electric power to the power reception device 30 of the mobile object 20 have the same configuration and are arranged along a travel route of the mobile object 20. Of course, the power transmission devices 50 may be arranged on the road surface RS in two dimensions, not just along the travel route of the mobile object 20. Each power transmission device 50 is connected to common main power lines RFP. The main power lines RFP are supplied with alternating current power with a high frequency (e.g. 85 kHz) from the main power supply device 70. In the present embodiment, all of the power transmission devices 50 are configured to have the same configuration. In an alternative, each of the power transmission devices 50 may have a different configuration, as long as power transfer is feasible. For example, the power transmitting coils 51 of different sizes may be arranged alternately.

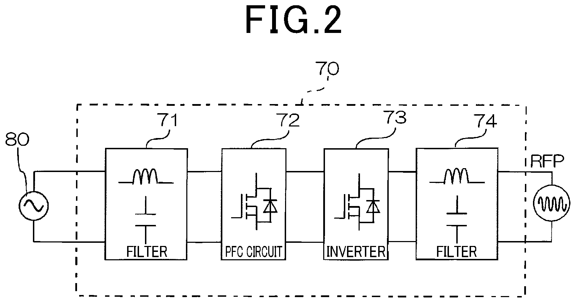

The main power supply device 70 receives an alternating current of a low frequency (e.g., 60 Hz) from the main power source 80 and converts it to an alternating current of a high frequency. FIG. 2 illustrates an example circuit configuration of the main power supply device 70. The main power supply device 70 includes, from the power reception side of the main power source 80, a noise filter 71 for AC output, a PFC circuit 72, an inverter 73, and a filter 74. The PFC circuit 72 is a known circuit that eliminates a phase difference between the input voltage and output current generated in the filter 71, suppresses harmonics, and thereby improves the power factor to approach one. The power supplied from the main power source 80 is converted to the alternating current of the above frequency by the inverter 73 and output to the main power lines RFP. The voltage output to the main power lines RFP correspond to a first voltage.

Each power transmission device 50 is supplied with electric power from the main power lines RFP to operate. As illustrated in FIG. 1, each power transmission device 50 includes a resonance circuit formed of a power transmission coil 51 and a resonance capacitor 52, where an impedance circuit 55 is interposed between the resonance capacitor 52 and the main power lines RFP. The impedance circuit 55 is a circuit that controls the supply of high-frequency power from the main power lines RFP to the resonance circuit, and is equivalent to a relay or switching element that turns the supply of high-frequency power on and off in the present embodiment.

Each power transmission device 50 further includes a control circuit 58 that controls this impedance circuit 55, a Hall element 57 that is a magnetic sensor that detects the presence of the mobile object 20, and a DC supply unit 60 that supplies the control circuit 58 with DC power for actuation. Although the power transmission devices 50 will now be described in more detail, not all of the power transmission devices 50 are in operation at all times. Only the power transmission devices 50 that the mobile object 20 is approaching are in operation. In the present embodiment, the approach of the mobile object 20 is detected by the Hall element 57 detecting the magnetic force of the magnet 24 provided on the mobile object 20. When the approach of the mobile object 20 is detected, the control circuit 58 changes the impedance of the impedance circuit 55. That is, in a circuit configuration where the impedance circuit 55 can be turned on and off, when the approach of the mobile object 20 is detected, the impedance circuit 55 is turned on (conducts), and when the mobile object 20 leaves the coverage area of the power transmission coil 51, the impedance circuit 55 is turned off (blocked). The detection of the mobile object 20 approaching and leaving may be implemented using any other method, such as detecting changes in mutual inductance caused by the power reception coil 31 approaching the power transmitting coil 51. There is no limit to the number of power transmission devices 50 in operation. Two or more power transmission devices 50 in close proximity to the mobile object 20 may be in operation.

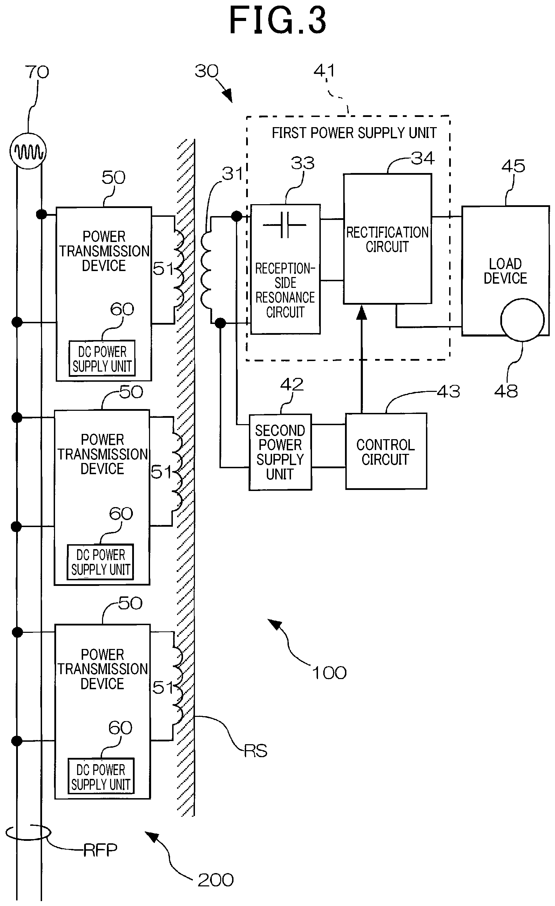

FIG. 3 illustrates the schematic configuration of the power transmission devices 50 and the power reception device 30. FIG. 3 illustrates a state in which one of the plurality of power transmission devices 50 is supplying power to the power reception device 30 of the mobile object 20. At this time, the power transmitting coil 51 of the power transmission device 50 is magnetically coupled to the power reception coil 31 of the power reception device 30, and an induced current (AC) flows through the power reception coil 31. The power reception coil 31 efficiently receives power through the power reception side resonance circuit 33 provided in the first power supply unit 41. A rectification circuit 34 is provided after the power reception side resonance circuit 33, and the power received by the power reception coil 31 is converted to direct current, which is in turn output to the load device 45. Although the load device 45 represents everything that uses the power output from the first power supply unit 41, the load device 45, in the case of the mobile object 20, includes a load that uses the main power used by the mobile object, such as the motor 48 for moving the mobile object 20. The load device 45 may further include a battery that temporarily stores electric power.

The second power supply unit 42 is a circuit that generates small amounts of DC power separately from the first power supply unit 41, and operates by receiving power from both ends of the power reception coil 31, that is, from a stage before the power reception side resonance circuit 33. The DC voltage output from the second power supply unit 42 is used by the control circuit 43, etc. The configuration of the second power supply unit 42 and the specific circuit configuration of the control circuit 43, etc., will be described in detail later.

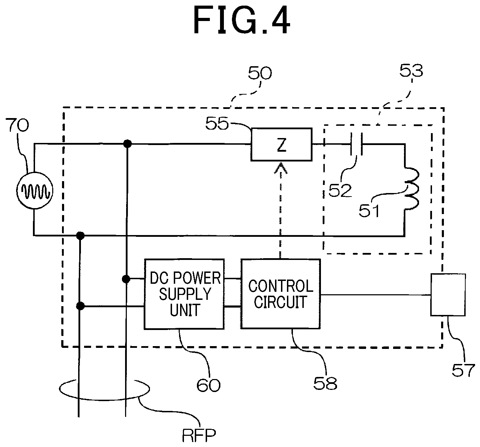

To summarize the above from the perspective of wireless power transfer, on the ground side, the power source is the main power source 80, and the main power supply device 70 installed on the ground side converts the power from the main power source 80 into high frequency AC power, which is in turn supplied to the main power lines RFP. Therefore, simply laying the main power lines RFP may be sufficient to supply power to the plurality of power transmission devices 50 installed beneath the road surface RS. Of course, although there may be cases where communication lines are laid to communicate information with the power transmission devices 50, the main power lines RFP are sufficient as power supply lines. In each power transmission device 50, electric power is supplied to the mobile object 20 wirelessly via the resonance circuit 53 formed of the resonance capacitor 52 and the power transmission coil 51, as illustrated in FIG. 4. The DC power required within the power transmission device 50 is supplied from the DC power supply unit 60. The voltage of the DC power supplied from the DC power supply unit 60 to the control circuit 58 corresponds to a second voltage.

On the other hand, the power reception device 30 of the mobile object 20 efficiently receives the induced current that occurs in the power reception coil 31, which is magnetically coupled to the power transmission coil 51, via the power reception side resonance circuit 33, and supplies it to the load device 45 via the rectification circuit 34. The first power supply unit 41 described already above refers to this configuration in which electric power is supplied to the load device 45 in the form of direct current. On the other hand, the small amount of power used by the mobile object 20 is supplied from the second power supply unit 42 described above. In this way, wireless power transfer of all the power supplied to and used by the mobile object 20, including the power required by the power transmission device 50, is achieved using only the power supplied from the main power lines RFP.

(A2) Configuration and Operation of DC Power Supply Unit and Second Power Supply Unit:

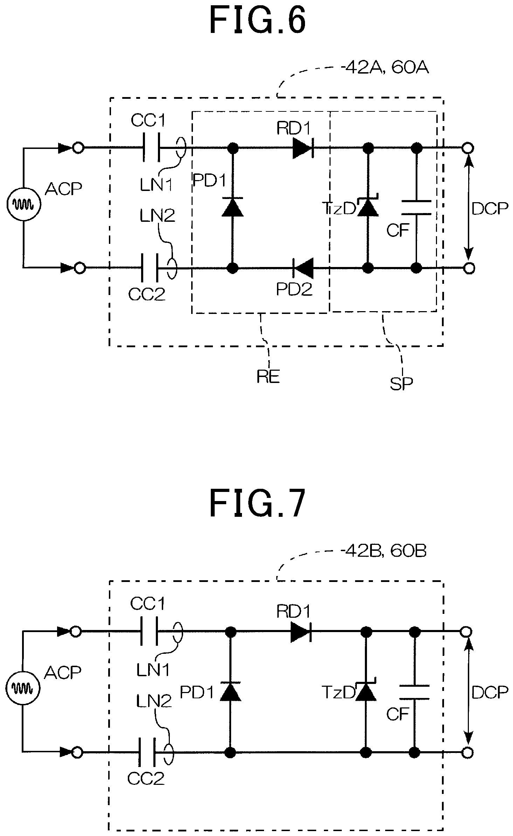

The specific configuration and operation of the DC power supply unit 60 in the transmission device 50 and the second power supply unit 42 in the power reception device 30 will now be described. As already described, the DC power supply unit 60 of the power transmission device 50 provides DC power at a second voltage as its operating voltage to the control circuit 58 and others included in the power transmission device 50, as illustrated in FIG. 4. In the example illustrated in FIG. 4, the control circuit 58 is connected to a Hall element 57 and drives the impedance circuit 55 by detecting the magnetic force of the magnet 24 mounted to the mobile object 20 and thereby detecting the approach of the mobile object 20. The power for the operation of this control unit 58 is provided by a DC low-voltage power source. The DC power supply unit 60 supplies a second voltage (in this case 5 V) which is lower than the first voltage output by the main power lines RFP. The DC power supply unit 60 is supplied with electric power from the main power lines RFP. However, since the main power lines RFP are high-voltage and high-frequency power lines, a configuration is known in which a transformer is used to step down and rectify the voltage to acquire a DC low-voltage output. The present embodiment does not employ components which are liable to become larger, such as transformers, and adopts the circuit diagram described later using FIG. 6 and figures subsequent thereto.

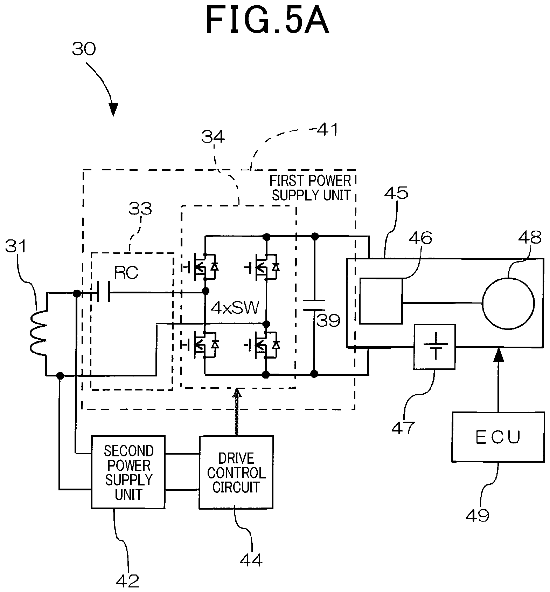

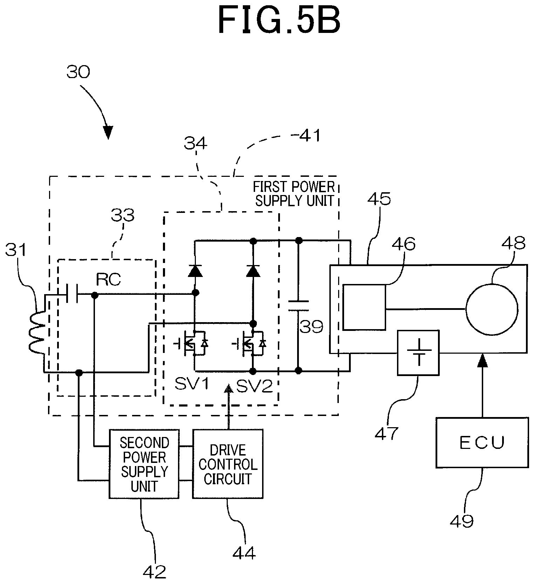

In the present embodiment, the second power supply unit 42 on the power reception device 30 side has a similar circuit configuration. Also in the power reception device 30, the voltage induced in the power receiving coil 31 is a high voltage with a high frequency, and main power used by the mobile object 20 is generated by the first power supply unit 41 and supplied to the load device 45, while the low DC voltage used by the power reception device 30 itself is supplied by the second power supply unit 42. An example circuit configuration in the mobile object 20, focusing on the power reception device 30, is illustrated in FIG. 5A. In this embodiment, the power reception side resonance circuit 33 of the power reception device 30 includes a resonance capacitor RC connected in series. The rectification circuit 34, which receives the AC output from the reception side resonance circuit 33, is configured as a synchronous rectifier using four switching elements SW, and converts an alternating current to a direct current in synchronization with the alternating voltage by exclusively turning on and off the pairs of switching elements disposed at diagonal positions in FIG. 5A. A smoothing capacitor 39 is connected between outputs of the rectification circuit 34 to reduce ripples after rectification and supply DC power to the load device 45. This corresponds to the operation of the first power supply unit 41. The load device 45 contains an inverter 46, a drive motor 48 driven by outputs of the inverter, and a battery 47. In an alternative, as illustrated in FIG. 5B, the synchronous rectifier 34A may be formed of diodes D1 and D2 on the upper arm side and switching elements SV1 and SV2 on the lower arm side. The upper-arm and lower-arm may be exchanged I configuration.

The second power supply unit 42 is supplied with AC power from where the power receiving coil 31 and the resonance circuit 33 on the power reception side are connected, converts the AC power internally to a low DC voltage, and outputs the low DC voltage to the drive control unit 44. The drive control circuit 44 performs rectification control to switch on and off switching elements SW in the rectification circuit 34 that is configured as the synchronous rectifier described above. The drive control circuit 44 is an example of the control circuit 43 illustrated in FIG. 3.

First Example of Circuit Configuration:

The following four configurations will now be described in sequence, regarding the configuration of each of the DC power supply unit 60 of the power transmission device 50 and the second power supply unit 42 of the power reception device 30 described above. FIG. 6 is a circuit diagram illustrating the circuit configuration of the DC power supply unit 60A and the second power supply unit 42A as the first example of configuration. This circuit receives a high frequency and high voltage AC voltage ACP and outputs a low DC voltage DCP. For the DC power supply unit 60A, the input is high frequency and high voltage AC power from the main power lines RFP, while for the second power supply unit 42A, the input is high frequency and high voltage AC power induced in the power reception coil 31.

Isolation capacitors CC1 and CC2 are interposed in series on the two power lines LN1 and LN2 of this circuit, respectively, and a protection diode PD1 is connected in parallel to the output side of the isolation capacitors CC1 and CC2. A rectification diode RD1 is connected in series in the forward direction to the output side of the isolation capacitor CC1, and a reverse protection diode PD2 is connected in series in the reverse direction to the output side of the isolation capacitor CC2. A Zener diode TZD and a smoothing capacitor CF are connected in parallel to the output side of both diodes PD1 and PD2. At least the circuitry including the rectification diode RD1 may be called a rectification unit RE, and the circuitry including the Zener diode TZD and the smoothing capacitor CF may be called a regulated power supply unit SP. The rectification unit RE may include the protective diode PD1 and the reverse protection diode PD2. Although not shown, the same applies to FIGS. 7 to 9.

The DC power supply unit 60A and the second power supply unit 42A, both having such a circuit configuration, are insulated from the high frequency and high voltage AC voltage ACP by the isolation capacitors CC1 and CC2, and an alternating voltage is generated between the two power lines LN1 and LN2 according to changes in the AC voltage ACP. Only when the potential on the power line LN1 side becomes higher than that on the other power line LN2, the charge stored in the isolation capacitors CC1 and CC2 is discharged via the rectification diode RD1 to charge the smoothing capacitor CF, but the part of the alternating voltage that exceeds the Zener breakdown voltage (hereafter simply referred to as the Zener voltage) of the Zener diode TzD will flow through the Zener diode TzD and be recovered via the reverse protection diode PD2, so the voltage across the smoothing capacitor CF never exceeds the Zener voltage of the Zener diode TzD. Therefore, the low DC voltage DCP is kept at the Zener voltage. When the AC voltage ACP is reversed, the potential difference between the power line LN1 side and the power line LN2 side is kept at the forward drop voltage of the protection diode PD1, so the smoothing capacitor CF is not affected in any way. Although the DC power supply unit 60A and the second power supply unit 42A are connected to the high frequency and high voltage AC voltage ACP, only the amount of current corresponding to the charge accumulated in the isolation capacitors CC1 and CC2 during one AC cycle flows through the power lines LN1 and LN2. Therefore, the amount of power output from the circuit may be readily adjusted by the capacitances of the isolation capacitors CC1, CC2. If a small amount of power is handled by the DC power supply unit 60A and the second power supply unit 42A, that is, if the capacitances can be reduced, capacitors with high withstand voltage such as ceramic capacitors may be used as isolation capacitors CC1 and CC2 instead of capacitors with low withstand voltage such as film capacitors, which are often used in power supply circuits. This can be readily implemented even when the AC voltage ACP is high.

Furthermore, the isolation capacitors CC1 and CC2 allow the DC power source unit 60A and the second power supply unit 42A to be readily isolated from the side that supplies the AC voltage ACP, that is, from the main power lines RFP and the power lines of the first power supply unit 41, making the DC power source unit 60A and the second power supply unit 42A less susceptible to noise and other influences. As a result, the possibility of occurrence of malfunctions in control circuits and other circuits that use DC power supply unit 60A or the second power supply unit 42A can be reduced. In addition, the circuits can be compact in size without the need for step-down components such as a transformer for step-down from high voltages. Still furthermore, since resistors are not used in the circuit configuration, there is no loss due to resistance, and the efficiency of the circuits can be improved.

Second Example of Circuit Configuration:

A second example of configuration of the DC power supply unit 60 and the second power supply unit 42 will now be described with reference to FIG. 7. FIG. 7 illustrates a circuit diagram of each of the DC power supply unit 60B and the second power supply unit 42B. The second example of configuration is the same as the first example of configuration (FIG. 6) except that the reverse protection diode PD2 is not provided. In each of the DC power supply unit 60B and the second power supply unit 42B of the second example, the circuitry can be simplified because of the absence of the reverse protection diode PD2. In addition, since the reverse protection diode PD2 does not cause a forward voltage drop, the low DC voltage DCP can be increased by that forward drop voltage. Other effects are the same as in the first example.

Third Example of Circuit Configuration:

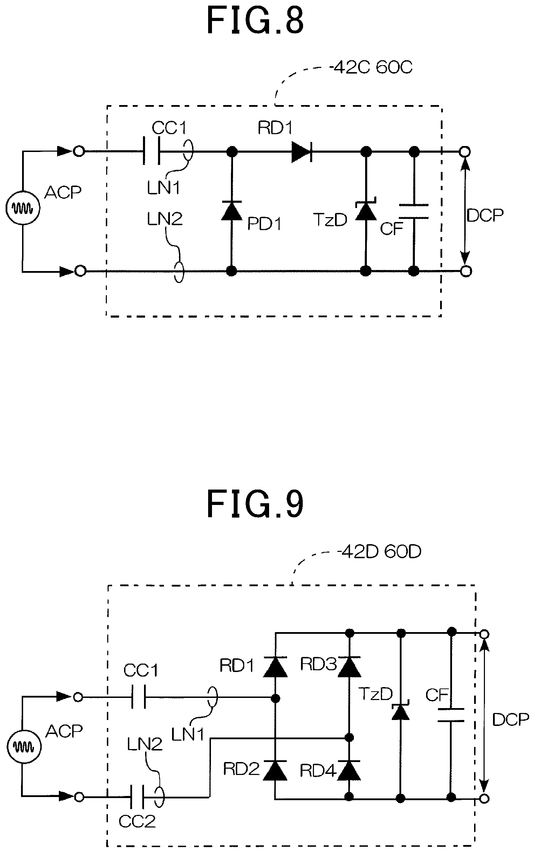

A third example of configuration of the DC power supply unit 60 and the second power supply unit 42 will now be described with reference to FIG. 8. FIG. 8 illustrates a circuit diagram of each of the DC power supply unit 60C and the second power supply unit 42C. The third example of configuration is the same as the second example of configuration (FIG. 7), except that the isolation capacitor CC2 is not provided. According to the third example of configuration, the potential on the power line LN2 can be used as the ground potential for the low DC voltage DCP, as an additional effect to the same effects as in the second example.

Fourth Example of Circuit Configuration:

A fourth example of configuration of the DC power supply unit 60 and the second power supply unit 42 will now be described with reference to FIG. 9. FIG. 9 illustrates a circuit diagram of each of the DC power supply unit 60D and the second power supply unit 42D. The fourth example of configuration has a similar configuration as compared to the first and second examples of configuration (FIG. 6 and FIG. 7), except that four rectification diodes RD1 to RD4 are provided, which constitute a diode bridge to implement full-wave rectification.

In this circuit configuration, the conversion efficiency can be almost doubled by using full-wave rectification, compared to the first to third examples of configuration, which use half-wave rectification to convert from AC to DC. Therefore, the capacitances of the isolation capacitors CC1 and CC2 can be reduced. Other effects, such as compactness and high efficiency with no loss, are the same as in the first through the third examples of configuration.

According to the power reception device 30 of the first embodiment described above, it is not necessary to supply part of the power to be supplied to the load device 45 to the control unit that controls the first power supply unit 41, and the power configuration on the mobile object 20 side can be simplified. Furthermore, as illustrated in the first to fourth examples of configuration, the second power supply unit 42 does not have to use a transformer or the like for step-down and isolation from the power lines, and the second power supply unit 42 can be implemented in a simplified configuration, which also readily facilitates downsizing. Furthermore, the circuit efficiency for supplying power can be increased.

On the other hand, according to the power transmission system 200 including the power transmission devices 50 that perform wireless power transfer in the first embodiment, the DC voltage as the power source voltage for the control circuit included in each power transmission device 50 can be generated within the power transmission device 50. Therefore, there is no need to lay power lines to supply the DC voltage to each power transmission device 50, separate from the main power lines RFP, and the ease of laying and handling of the power transmission system can be improved. Furthermore, as illustrated in the first to fourth examples of configuration of the DC power supply unit 60, there is no need to use a transformer or the like for step-down and isolation from the power lines, leading to a simple configuration of the DC power supply unit 60 and facilitating its downsizing. Furthermore, the circuit efficiency for supplying power can be increased.

B. Second Embodiment:

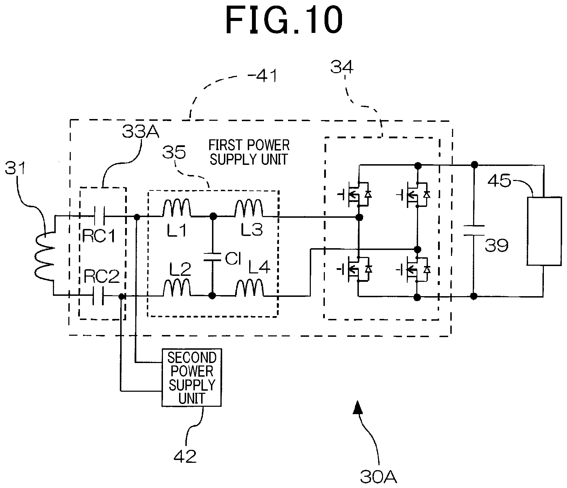

A power reception device 30A, which is a constituent of the wireless power transfer system in the second embodiment, will now be described. FIG. 10 is a schematic diagram illustrating the configuration of a power reception device 30A according to the second embodiment. Unlike the first embodiment, the power reception device 30A includes power reception side resonance capacitors RC1, RC2 at both ends of the power reception coil 31 as a power reception side resonance circuit 33A. An immittance filter 35 is provided between the power reception side resonance circuit 33A and the rectification circuit 34. The power reception side resonance circuit 33A uses a circuit configuration where the output is a voltage source output. To this end, the immittance filter 35 is provided at the output of the power reception side resonance circuit 33A. Typically, a current source output is used when charging a battery. The immittance filter 35 of the present embodiment is formed of four reactors L1 to L4 and a capacitor CI. Of course, it is also possible to use an immittance filter of the $\pi$-CLC type or the T-CLC type instead of the immittance filter of the T-LLC type.

In the second embodiment, as compared to the first embodiment, there are differences in that the immittance filter 35 is provided between the power reception side resonance circuit 33A and the rectification circuit 34, and that power is supplied to the second power supply unit 42 not from where the power reception coil 31 and the power reception side resonance circuit 33 are connected, but from where the power reception side resonance circuit 33 and the immittance filter 35 downstream are connected. This configuration of the second embodiment exhibits the same effects as that of the first embodiment. Therefore, in the second embodiment, even if the load device 45 is disconnected from the first power supply unit 41 and the power supply from the first power supply unit 41 is ceased, the power supply to the second power supply unit 42 will continue. Therefore, various types of controllers that are operating using the power supplied from the second power supply unit 42, such as the drive control circuit 44 illustrated in FIG. 5, continues to operate. The various circuits, such as the drive control circuit 44, that powered by the second power supply unit 42 to operate will be described together later.

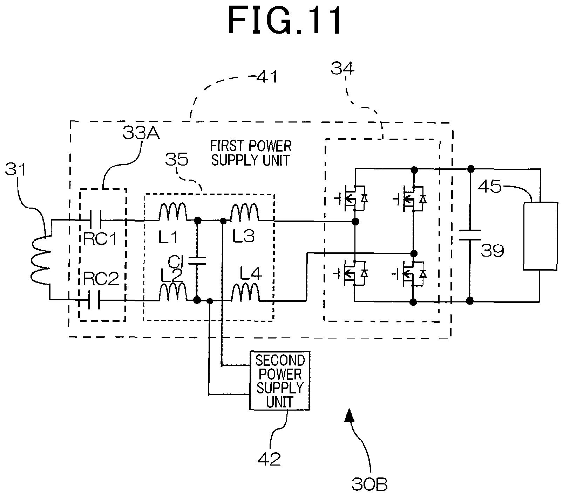

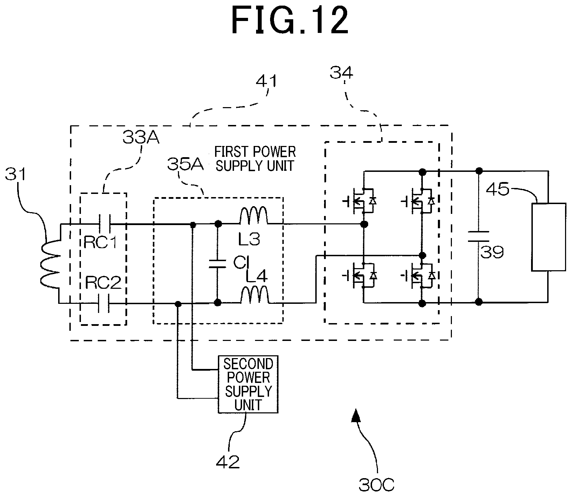

The points from which power is supplied to the second power supply unit 42 are not limited to the points illustrated in FIG. 10, that is, the connection points between the power reception side resonance circuit 33 and the immittance filter 35, but may also be, for example, the ends of the capacitor CI in the immittance filter 35, as illustrated in FIG. 11 as the power reception device 30B. In the power reception device, as illustrated in FIG. 12 as the power reception device 30C, the immittance filter may be configured without the internal reactors L1 and L2. The immittance filter 35A does not include the reactors L1 and L2 inside, but instead uses the leakage inductance of the power reception coil 31 that is connected via the power reception side resonance circuit 33A to the immittance filter 35A. This leads to a simple configuration of the immittance filter 35A and facilitating its downsizing.

C. Third Embodiment:

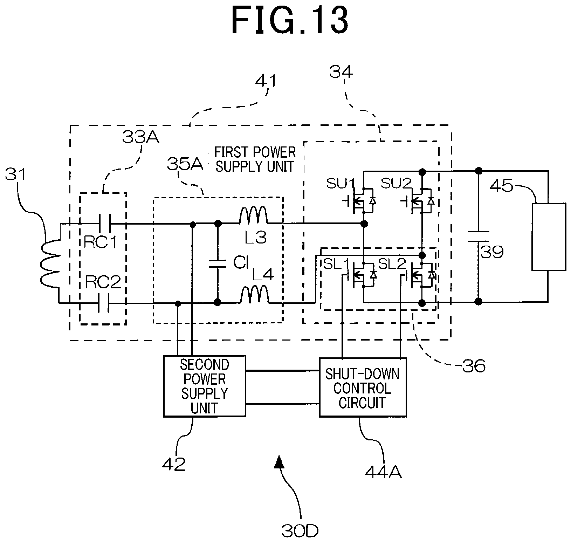

A power reception device 30D, which is a constituent of the wireless power transfer system in the third embodiment, will now be described. FIG. 13 is a schematic diagram illustrating the configuration of a power reception device 30D according to the third embodiment. This power reception device 30D is the same as in the second embodiment in that the immittance filter 35A illustrated in FIG. 12 is included, but differs in that a shut-down control circuit 44A that is supplied with DC power from the second power supply unit 42 is provided. This shut-down control circuit 44A drives the two switching elements SL1 and SL2 that constitute a so-called lower arm 36, among the four switching elements in the rectification circuit 34, which is a synchronous rectifier. The four switching elements of the rectifier circuit 34, including the two switching elements SU1 and SU2 that constitute an upper-arm, are also driven by the drive control circuit 44 illustrated in FIG. 5. The two switching elements SL1 and SL2 that constitute the lower-arm 36 are configured to be driven by drive signals from the drive control circuit 44 and the shut-down control circuit 44A in a Wired-OR manner.

In the power reception device 30D of the third embodiment having such a circuit configuration, when an abnormality is detected in the first power supply unit 41 or the load device 45, a shut-down signal is output from the shut-down control circuit 44A to the two switching elements SL1 and SL2 of the lower-arm 36, and both the switching elements SL1 and SL2 are both driven to a conductive state. As a result, the power lines LN1 and LN2 of the first power supply unit 41 are substantially short-circuited on the output side of the immittance filter 35A, although there is on-resistance of the switching elements SL1 and SL2. The switching circuitry SL1 and SL2, which are simultaneously turned on by the shut-down control circuit 44A, serves as a protection circuit for the first power supply unit 41.

In this state, the first power supply unit 41 does not supply power, but the second power supply unit 42 operates normally to supply to the shutdown control circuit 44A the DC voltage required for the operation of the shutdown control circuit 44A, because the first power supply unit 41 is supplied with electric power from where the power reception resonance circuit 33A and the immittance filter 35A are connected. This is because, in the immittance filter illustrated in FIGS. 10 to 13, the voltages at its input or across the capacitor CI when the immittance filter is outputting current normally and when the output of the immittance filter is short-circuited and the protection circuit is in operation are kept at the same level. That is, in a state where the protection circuit is working with the switching elements SL1 and SL2 turned on simultaneously, the voltage input to the rectification circuit 34A becomes 0 volts, so the first power supply unit 41 is kept in a state of not outputting power, while the voltage across the capacitor CI of the immittance filter 35A is kept at the same level as in a normal state (where AC voltage at the resonance frequency is applied). Hence, the second power supply unit 42 can receive this voltage from any of the circuits illustrated in FIG. 6 to FIG. 9, or its equivalent, and continue to supply predefined power to the shutdown control circuit 44A, etc.

In the power reception device 30D of the third embodiment described above, if an abnormality occurs in the load device 45, the switching elements SL1 and SL2 of the rectification circuit 34, which is provided for rectification, are driven to short-circuit the output of the first power supply unit 41, thereby ceasing the supply of power from the first power supply unit 41 to the load device 45. Furthermore, even in this state, the second power supply unit 42 is able to output the predetermined DC voltage to the outside, for example to the drive control circuits 44A and 44B, in the same manner as when the first power supply unit 41 is operating normally.

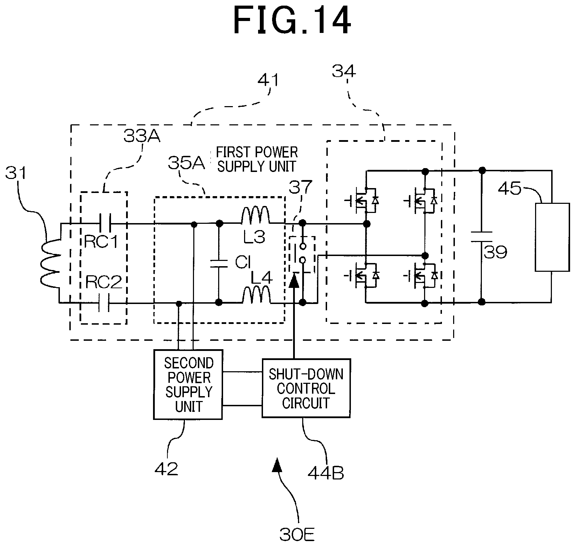

In the circuit configuration illustrated in FIG. 13, the two switching elements SL1 and SL2 that constitute the lower arm of the rectifier circuit 34 are turned on (i.e., placed in the conductive state) at the same time in order to short-circuit the output of the immittance filter 35A. In alternative, as illustrated in FIG. 14, a short-circuit contact 37 may be provided, which is driven by a shut-down control circuit 44B. Such a short-circuit contact 37 can be readily implemented using a relay or switching element. Even with this circuit configuration, in a case where some kind of abnormality occurs on the load device 45 side, the output of the first power supply unit 41 can be short-circuited. Therefore, the same effect can be exhibited as in the case of the circuit configuration illustrated in FIG. 13.

D. Fourth Embodiment:

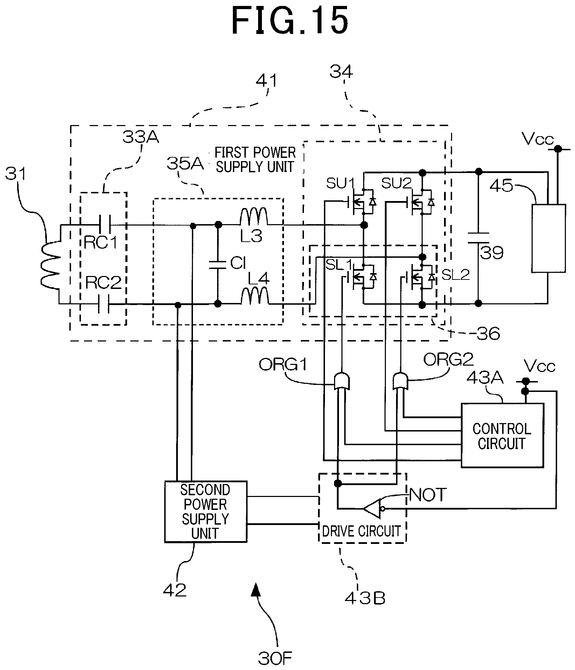

A power reception device 30E, which is a constituent of the wireless power transfer system in the fourth embodiment, will now be described. FIG. 15 is a schematic diagram illustrating the configuration of a power reception device 30E according to the fourth embodiment. This power reception device 30E is common in the configuration of the immittance filter 35A illustrated in FIG. 12 to the power reception device in each of the second and third embodiments is provided, but differs in that a shut-down control circuit 44C that is supplied with DC power from the second power supply unit 42 is provided. In the circuit diagram illustrated in FIG. 15, a control circuit 49 is further provided to drive the four switching elements of the rectification circuit 34 to implement synchronous rectification. In this example, the control circuit 49 is actuated by the power supply voltage Vcc derived from the DC voltage supplied from the first power supply unit 41 to the load device 45.

Two of four drive signals output from the control circuit 49 are directly output to the gates of the switching elements SU1 and SU2, while the remaining two drive signals are input to the two-input OR gates ORG1 and ORG2, one for each, and are output to the gates of switching elements SL1 and SL2 via the OR gates ORG1 and ORG2. The two-input OR gates ORG1 and ORG2, together with the shut-down control circuit 44C, are powered by the DC voltage from the second power supply unit 42 as the power source. The output signal from the shut-down control circuit 44C is input to the remaining input terminals of the two-input OR gates ORG1 and ORG2. The shut-down control circuit 44C incorporates a NOT-gate NOT that receives the power supply voltage Vcc as input, and the output of the NOT-gate NOT is the output signal to the two-input OR gates ORG1 and ORG2. Therefore, in the event where the power supply voltage Vcc derived from the load device 45 is lost and becomes 0 volts, the output signal of the shut-down control circuit 44C, which incorporates the NOT-gate NOT, becomes high, and even if the output signal from the control circuit 49 is low due to loss of the power supply voltage Vcc, outputs of the two input OR gates ORG1 and ORG2 become high. As a result, the switching elements SL1 and SL2 are placed in a conductive state, which allows the output voltage of the first power supply unit 41 to be turned off as in the third embodiment.

In the power reception device 30E of the fourth embodiment, in the event that the power supply to the control circuit 49, which drives the switching elements of the rectification circuit 34 to implement synchronous rectification, is lost, the output of the first power supply unit 41 can be turned off at the rectification circuit 34 by the operations of the shutoff control circuit 44C, the two-input OR gates ORG1, ORG2, which are supplied with power from the second power supply unit 42. To implement such an operation, only a small amount of power needs to be supplied from the second power supply unit 42, and a practical circuit configuration can be implemented using the simple configuration of the second power supply unit 42 illustrated in FIGS. 6 to 9.

E. Fifth Embodiment:

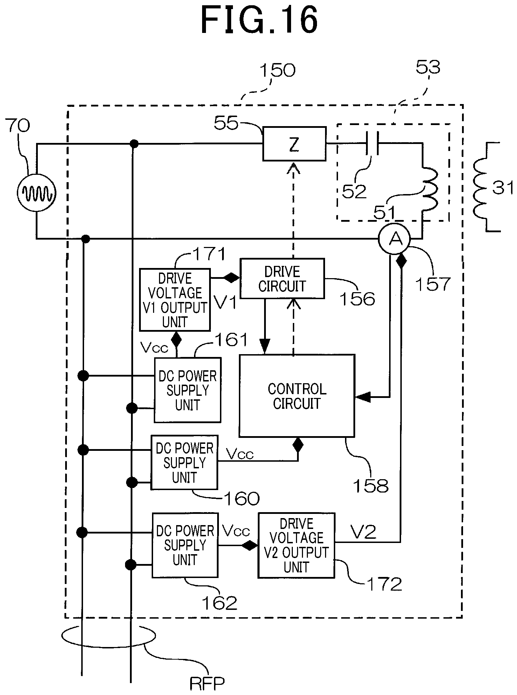

A power transmission device 150, which is a constituent of the wireless power transfer system in a fifth embodiment, will now be described. As illustrated in FIG. 16, the power transmission device 150 operates by receiving power from the main power supply device 70, and is equipped with a resonance circuit 53 including a power transmission coil 51 and a resonance capacitor 52, and an impedance circuit 55, in the same way as the power transmission device 50 of the first embodiment. The power transmission device 150 is further equipped with a drive circuit 156 that drives the impedance circuit 55, a current sensor 157 that detects the current flowing through the resonance circuit 53, and a control unit 158 that controls the impedance circuit 55. The control unit 158 uses the current value detected by the current sensor 157 to control the impedance circuit 55 via the drive circuit 156, and controls the current Ir flowing through the resonance circuit 53. The drive circuit 156 and current sensor 157 are each equipped with a circuit that detects their own operating voltages V1 and V2, and the drive circuit 156 and current sensor 157 output the detected operating voltages V1 and V2 to the control unit 158. The operating voltages V1 and V2 are dealt with in the sixth embodiment described later, so it is not necessary to detect them in the fifth embodiment.

The power source for each component of the power transmission device 150 includes the following configuration. In the present embodiment, since the operating voltages of the drive circuit 156, current sensor 157, and control unit 158 are different, three DC power sources 160, 161, and 162 are provided. The configuration of each of the DC power supply units 160-162 may be any of the circuit configurations shown as the first to third examples of configuration for the DC power supply unit 60 in the first embodiment. The DC output of each of the DC power supply units 160-162 is the second voltage Vcc, which is the operating voltage of the control unit 158. On the other hand, the output of the DC power supply unit 161 is output to the drive voltage V1 output unit 171, where is converted to the drive voltage V1 suitable for the operation of the drive circuit 156. Similarly, the output of DC power supply unit 162 is output to the drive voltage V2 output unit 172, where it is converted to the drive voltage V2 suitable for the operation of current sensor 157. These drive voltage V1 output part 171 and drive voltage V2 output part 172 may be implemented as well-known DC/DC converters. To ensure the current capacity necessary for the operation of each part, three DC power supply units 160-162 outputting the same second voltage Vcc are provided in this embodiment. In an alternative, electric power may be supplied from only the DC power supply unit 160 as long as the current capacity is ensured. It is acceptable to configure the DC power supply units 160-162 to output voltages as required for the operations of the control unit 158, the drive circuitry 156, and the current sensor 157, respectively. In this case, the drive voltage V1 output unit 171 and the drive voltage V2 output unit 172 are not required.

In the power transmission device 150 of the present embodiment, when the power reception coil 31 of the power reception device 30 is not in close proximity, the impedance of the impedance circuit 55 is high, and only a small amount of current (standby current) flows through the resonance circuit 53. This current value Ir is detected by the current sensor 157 and output to the control unit 158. In the steady state where the second voltage Vcc supplied from each DC power supply unit 160 has been established, the control unit 158 monitors this current value Ir and detects the approach of the power reception coil 31. When the power reception coil 31 approaches the power transmitting coil 51, the current flowing through the resonance circuit 53 increases due to magnetic field coupling. When the current value Ir flowing through the resonance circuit 53 exceeds a predefined threshold value, the control unit 158 determines that the power reception coil 31 is approaching, and outputs a drive signal via the drive circuit 156 to switch the impedance of the impedance circuit 55 to a lower value. As a result, the current value Ir flowing through the resonance circuit 53 increases, and power is supplied to the power reception device 30 via magnetic field coupling. Conversely, when the power reception coil 31 is moved away from the power transmission coil 51, the current value Ir decreases, so the control unit 158 compares this current value Ir with the predetermined threshold value. When the current value Ir falls below the threshold value, the impedance circuit 55 is switched to a high impedance state.

The impedance control to switch the impedance of the impedance circuit 55 by the control unit 158 described above and the power control to turn on and off the supply of AC power to the power transmission coil 51, described in the first embodiment are performed assuming that the control unit 158 is in normal operation. The control unit 158 can be implemented as a discrete electrical circuit, but in the present embodiment, it is configured as a microcomputer including a CPU that performs arithmetic and logic operations and a memory that stores a program to cause this CPU to execute pre-defined control operations. In the case of the control unit 158 that performs arithmetic and logic operations, such as a microcomputer, it is a prerequisite that the second voltage Vcc for operation is within a specific rated range to guarantee normal operation. The second voltage Vcc typically is liable to be unstable for a pre-defined time immediately after initiation of power supply from the main power supply device 70 to the power transmission device 150, and in some cases, the results of arithmetic and logic operations may not be guaranteed.

As described in the first embodiment, in a configuration where a plurality of power transmission devices are installed, AC power may be supplied from the main power source 70 only to the power transmission devices 150 that are likely to be involved in power transfer, instead of supplying AC power from the main power source 70 to all of the power transmission devices. In such a configuration, each of the DC power supply units 160-162 outputs the power supply voltage Vcc only when AC power is supplied with electric power from the main power supply device 70. Therefore, in order to operate the control unit 158 that uses the second voltage Vcc in a stable manner, the following routine is performed in the present embodiment.

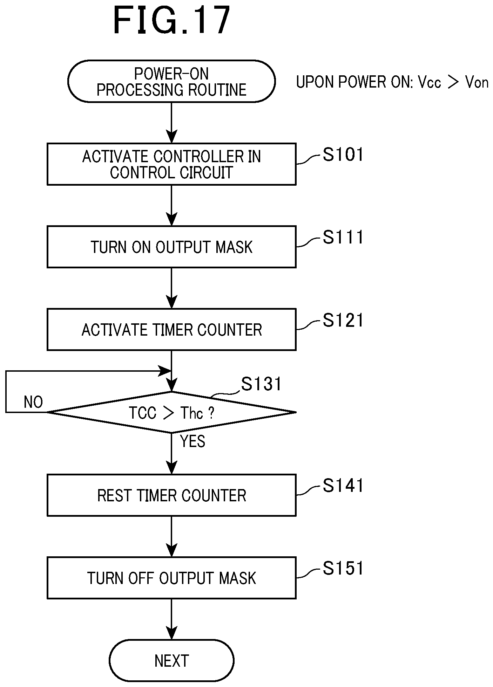

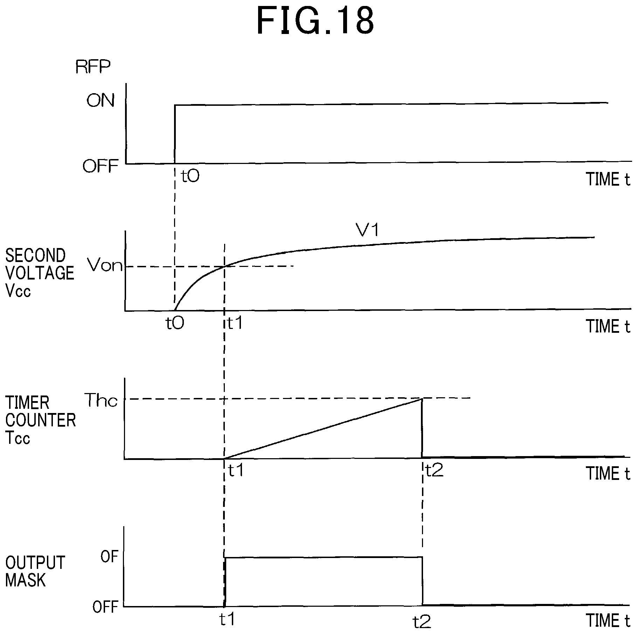

The control unit 158, which is configured as a microcomputer, performs the power-on processing routine illustrated in FIG. 17. The phrase as used herein "when powered on" refers to the timing when the second voltage Vcc applied to the power supply terminal of the control unit 158 becomes higher than a first threshold Von, which is the voltage at which the microcomputer constituting the control unit 158 starts to operate. A timing diagram when powered on is illustrated in FIG. 18. As illustrated in FIG. 18, once the main power supply device 70 is activated and the AC power supply to the main power lines RFP is initiated at time 0, the second voltage Vcc output from the DC power supply unit 160 gradually rises, and eventually reaches the rated voltage Vcc. When the second voltage Vcc rises and becomes higher than the first threshold Von at time t1, the microcomputer constituting the control unit 158 activates the arithmetic and logic operation circuit inside the control circuit (at step S101). This process corresponds to the initialization process in the microcomputer.

Next, the process of turning on output mask is performed (at step S111). The output mask refers to a process of masking output signals output from the output terminals of the control unit 158 and equally turning off the output terminals. The output terminals that are masked on have their outputs turned off, regardless of whether the result of the microcomputer's arithmetic and logic operation is 1 (logical high) or 0 (logical low). In this case, all output terminals are masked on. As a result, all of the output terminals of the control unit 158 are off, and the impedance circuit 55 is also kept in a low impedance state, which is the default state.

Subsequently, the microcomputer starts a built-in timer counter (at step S121). The timer counter counts up the counter value TCC at predefined time intervals. As illustrated in FIG. 18, the value increases linearly with a certain slope. The microcomputer repeatedly determines whether the timer counter value TCC has exceeded a threshold Thc corresponding to a predetermined time, until the counter value TCC exceeds the threshold Thc (at step S131). As illustrated in FIG. 18 as time t2, when the counter value TCC exceeds the threshold Thc, the timer counter is reset to 0 (at step S141), and the process of turning off the output mask that has been on is performed (at step S151). As a result, the output of the control unit 158 is masked from time t1 to time t2. After the above process, the program jumps to "NEXT" to exit the processing routine and the microcomputer of the control unit 158 performs normal control, such as impedance control that lowers the impedance of the impedance circuit 55 and increases the current value Ir of the resonance circuit 53 when the approach of the power reception coil 31 of the power reception device 30 is detected.

In the present embodiment, even when the second voltage Vcc supplied to the control unit 158 exceeds the first threshold Von at which the microcomputer that constitutes the control unit 158 can start its operation, the output of the control unit 158 is masked for a predefined period of time. Therefore, during this time, the power transmission device 150 does not provide output to various types of control targets, including the impedance circuit 55, and the control unit 158 become able to provide output to the control target after the second voltage Vcc becomes stable. As a result, malfunctions caused by the second voltage Vcc becoming unstable when powered on can be suppressed.

In this embodiment, the output from the control unit 158 is masked for a predefined period of time after the second voltage Vcc exceeds the first threshold Von. In an alternative, the microcomputer of the control unit 158 may be caused to only monitor the passage of a predefined time by implementing the time counter as software, or may be caused to repeatedly execute instructions that are not actual processing, such as NOP. In another alternative, a circuit that repeatedly generates NMI to the microcomputer may be provided in the control unit 158, and a non-maskable interrupt may be applied for a predefined time period, causing the microcomputer to repeatedly perform processing other than normal control, such as initialization.

F. Sixth embodiment:

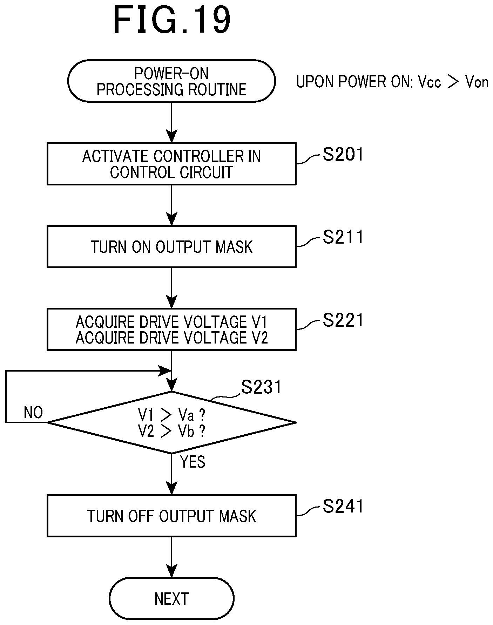

A sixth embodiment will now be described. The hardware configuration of the sixth embodiment is the same as that of the fifth embodiment, but differs in what process is performed when powered on. In the sixth embodiment, the control unit 158 of the power transmission device 150 performs the processing routine illustrated in FIG. 19 when powered on. When the main power supply unit 70 is activated and the supply of AC power at the first voltage to the main power lines RFP starts, the second voltage Vcc rises and, at time t1, becomes higher than the first threshold Von. At this timing, the microcomputer that constitutes the control unit 158 activates the arithmetic and logic operation circuit inside the control circuit (at step S201).

Subsequently, as in the fifth embodiment, the process of turning on the output mask is performed (at step S211). As a result, all of the output terminals of the control unit 158 are masked off, and the impedance circuit 55 is also kept in the low impedance state, which is the default state. Thereafter, the microcomputer acquires the drive voltage V1, which is the power supply voltage for the drive circuit 156, and the drive voltage V2, which is the power supply voltage for the current sensor 157 (at step S221). The microcomputer determines whether the acquired drive voltage V1 is higher than a predefined second threshold Va and whether the drive voltage V2 is higher than a predefined third threshold Vb (at step S231). The second threshold Va and the third threshold Vb used to make determinations for the drive voltage V1 and the drive voltage V2 may be the same or different.

Until the following condition 1 is met, the process step S231 is repeated, and when the condition 1 is determined to be met, the process of turning off the output mask is performed (at step S241).

$$V1 > Va \text{ and } V2 > Vb \qquad \text{(Condition 1)}$$

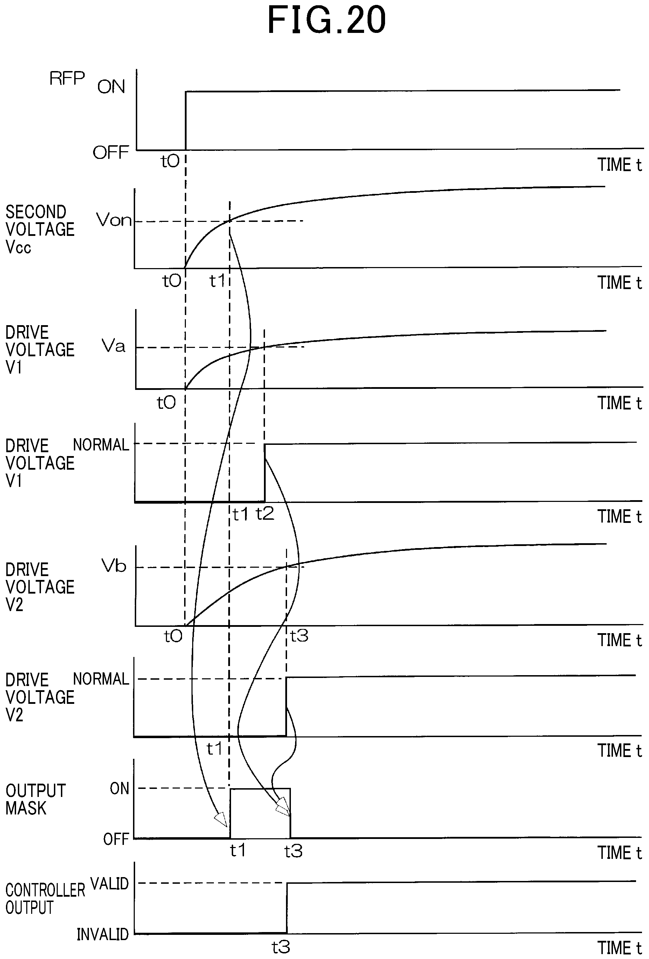

This is illustrated in FIG. 20. As illustrated, when the second voltage Vcc, which is the power supply voltage for the control unit 158, becomes higher than the first threshold Von, the output mask is turned on and this state is kept until the above condition 1 is met. When the drive voltages V1 and V2 are both higher than the second and third thresholds Va and Vb, respectively, the output mask is turned off and the output of the control unit 158 becomes valid for the first time. In this way, in the sixth embodiment, the timer counter of the fifth embodiment is not used, but the same effects as in the fifth embodiment are exhibited. Furthermore, in the sixth embodiment, the drive voltage V1 that is the power supply voltage for the drive circuit 156, and the drive voltage V2 that is the power supply voltage for the current sensor 157, are directly detected, and the output mask is turned off after confirming that they are the power supply voltages that allow each of circuits and sensors to operate normally. This allows unstable operation when powered on to be avoided more reliably. To invalidate the output of the control unit 158, a method other than turning on the output mask as in the fifth embodiment may be used.

G. Seventh embodiment:

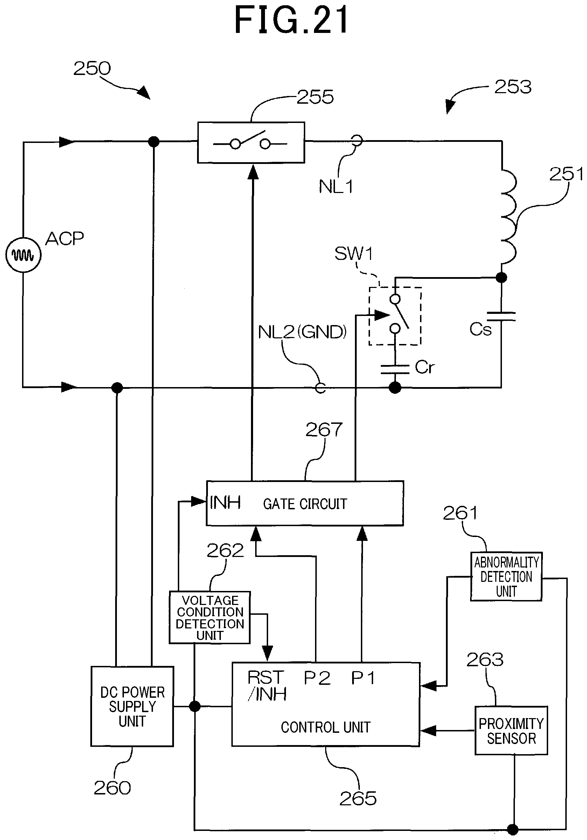

The configuration of a power transmission device 250 of a seventh embodiment is illustrated in FIG. 21. As illustrated, this power transmission device 250 operates with an AC voltage ACP as a first voltage applied between two power lines NL1 and NL2. The power transmission device 250 is equipped with a first capacitor Cs and a second capacitor Cr that, together with the power transmission coil 251, constitute a resonance circuit 253, a switching element SW1 that turns on and off connection of the second capacitor Cr, and an interruption unit 255 that interrupts application of the AC voltage ACP to the resonance circuit 253. When the switching element SW1 is turned on (closed), the second capacitor Cr is connected in parallel with the first capacitor Cs. This switching element SW1 performs impedance control. The interruption unit 255 also performs protection control.

In the resonance circuit 253, the two capacitors are connected in series to the power transmission coil 251 to form a series resonance (SS) circuit. The frequency of the AC voltage ACP is 85 kHz in the present embodiment, and the capacitances of the first capacitor Cs and the second capacitor Cr are set so that the resonance frequency of the resonance circuit 253 matches the frequency of the AC voltage ACP when the switching element SW1 is turned on, that is, when the two capacitors are connected in parallel with each other and the capacitance against the inductance of the power transmission coil 251 becomes a sum of the capacities of the two capacitors. On the other hand, when the switching element SW1 is off, the resonance frequency of the resonance circuit 253, which is formed of the power transmission coil 251 and the first capacitor Cs, is out of phase with the frequency of the alternating current voltage applied by the AC voltage ACP. Since the alternating current is applied between the two power lines NL1 and NL2, it is not necessary to say which is the ground line GND, but for convenience, the power line NL2 is hereinafter referred to as the ground line GND.

The power transmission device 250 includes a gate circuit 267 that drives the switching element SW1 and the interruption unit 255. The gate circuit 267 is connected to output ports P1 and P2 of a control unit 265. When the ports P1 and P2 are forced high, the gate circuit 267 drives the switching element SW1 and the interruption unit 255. The interruption unit 255 determines whether to apply the AC voltage ACP to the resonance circuit 253. The interruption unit 255 may be either reversibly or irreversibly operated, as long as it can be electrically turned on and off, such as a relay contact, fuse, or semiconductor switching element. In the present embodiment, the interruption unit 255 is configured to operate reversibly using a semiconductor switch, but it may also be configured using a component that is irreversibly turned off by an external signal. For example, the interruption unit 255 may be a thermal fuse with a heater, such that the heater heats and melts the fuse in response to a signal from the gate circuit 267. In an alternative, the interruption unit 255 may be configured like a breaker, such that once it is turned off, it does not return to the conductive state without either a manual operation or a recovery process by the control unit 265.

The power transmission device 250 further includes an abnormality detection unit 261 and a proximity sensor 263. The abnormality detection unit 261 detects an abnormality in the power transmission device 250 and may be, for example, a current sensor that detects overheating, overcurrent or the like in the power transmission device 250. In the case of the abnormality detection unit 261 being a sensor that detects, for example, overheating of the power transmission coil 251, the abnormality detection unit 261 is installed so as to be thermally coupled to a target for detection. In an alternative, the abnormality detection unit 261 may be a device that interacts with the control unit 265 and the control circuit 43 on the power reception device 30 side to detect an abnormality in the wireless power transfer system 100. For example, the device may detect that the approach of the power reception device 30 has been erroneously detected by the proximity sensor 263 as an abnormality. In such a case, the power transmission device 250 may be equipped with a communication unit that communicates with the power reception device 30.

In this power transmission device 250, DC power at the second voltage Vcc output from the DC power supply unit 260 is supplied not only to the control unit 265 but also to the abnormality detection unit 261 and the proximity sensor 263. In addition, a voltage condition detection unit 262 is connected to the power line of the second voltage Vcc to determine whether the second voltage Vcc has been established. The same method as in the fifth and sixth embodiments may be employed as the method of determination.

In the seventh embodiment, until the voltage condition detection unit 262 determines that the second voltage Vcc has been established, a signal is output to the reset terminal RST (or the operation prohibition terminal INH) of the control unit 265 to disable the operation of the control unit 265. Additionally, or alternatively, the voltage condition detection unit 262 outputs a signal to the inhibit terminal INH of the gate circuit 267, thereby inhibiting the output of the gate circuit 267 or placing it in a high impedance state.

In the power transmission device 250 of the seventh embodiment described above, when powered on, signals are not output to the interruption unit 255 and the switching element SW1 until the second voltage Vcc of the DC power source supplied to the control power supply unit 265 is established. This can prevent the control unit 265 from outputting erroneous signals to the interruption unit 255 and the switching element SW1 due to unstable power source voltage for the control unit 265 itself, the abnormality detection unit 261, and the proximity sensor 263, which could trigger erroneous operations in the protection control or impedance control.

H. Other Examples of Configuration of DC Power Source and Second Power Source:

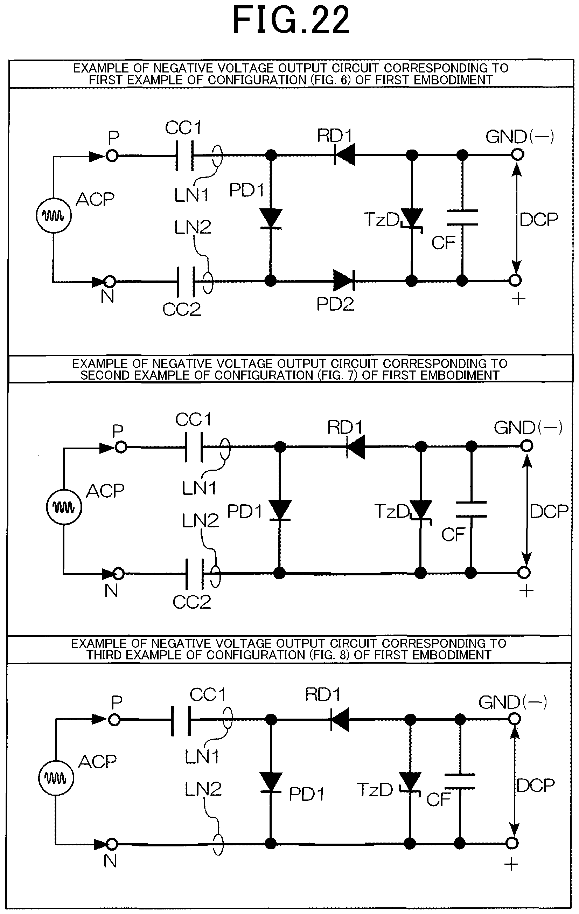

The various embodiments and examples of configuration have been described above, but the DC power supply units 60, 160, 260 and the second power supply units 42, 42A-42D are not limited to power supply units outputting positive voltages. In alternatives, they may be configured to generate negative voltages and supply power of negative voltages to necessary circuits. For example, as illustrated in FIG. 22, a negative voltage can readily be output according to the circuit diagrams corresponding to the first example of configuration, the second example of configuration, and the third example of configuration as illustrated in FIG. 6, FIG. 7, and FIG. 8, respectively. In each circuit diagram illustrated in FIG. 22, the directions of the diodes PD1, PD2, RD1, and Zener diode TzD, etc., are opposite to those in the first to third examples of configuration. The other elements are the same as those in the corresponding circuit diagrams. In the circuit diagrams in the top and middle rows of FIG. 22, the GND potential on one of the two lines that output the DC voltage DCP is electrically floating. In the circuit diagram in the bottom row of the same figure, the GND potential on one of the two lines that output the DC voltage DCP is common with the potential on either the P or N line for the AC voltage ACP.

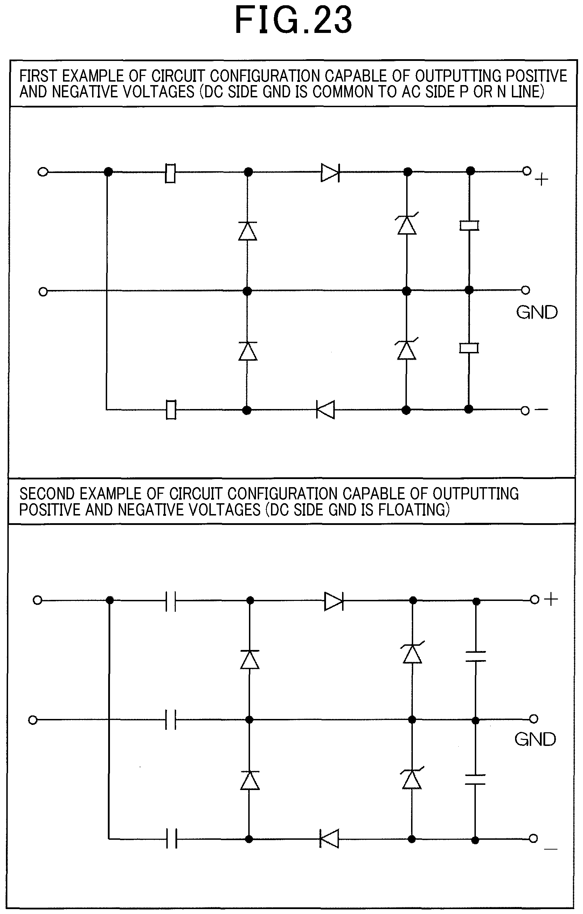

The DC power supply units 60, 160, and 260, and the second power supply units 42, 42A-42D, may be configured to output positive and negative voltages simultaneously if necessary. The upper and lower rows of FIG. 23 illustrate such circuit configurations. The upper row of FIG. 23 illustrates a circuit configuration that combines the circuit configuration that outputs positive voltage shown in FIG. 8 and the circuit configuration that outputs negative voltage shown in the lower row of FIG. 22. In the circuit configuration, the GND for the DC voltage DCP is shared with either the P or N line for the AC voltage ACP.

The lower row of FIG. 23 illustrates another example of configuration that outputs both positive and negative voltages. This example is a combination of the circuit configuration that outputs a positive voltage as illustrated in FIG. 7 and the circuit configuration that outputs a negative voltage as illustrated in the middle row of FIG. 22. In this circuit configuration, the GND potential for the DC voltage DCP is electrically floating. In this circuit configuration, both positive and negative voltages may be output simultaneously, and the capacitor CC2 may be used in a shared manner, so the number of circuit components may be reduced.

I. Other Embodiments:

(1) According to one of the other embodiments, a wireless power transmission system is provided. This wireless power transmission system includes: a plurality of power transmission devices installed in an area of movement of a mobile object and each equipped with a power transmission coil that wirelessly transmits power to a power reception device of the mobile object; main power lines that supply to the plurality of power transmission devices alternating current (AC) power at a first voltage for use in power transmission; a direct current (DC) power supply unit that receives the AC power from the main power lines and outputs power at a second voltage that is lower than the first voltage and is used for control within each of the plurality of power transmission devices. This wireless power transmission system can eliminate the need to install power lines for the second voltage, which is lower than the first voltage, in addition to the main power lines that supply AC power at the first voltage to the power transmission devices, thereby simplifying the configuration of the wireless power transmission system.

The plurality of power transmission devices may be arranged along a travel route of the mobile object, or may be arranged to fill a two-dimensional plane. The mobile object that receives electric power via the power reception device may be a four-wheel automobile, a two wheeled vehicle, or a large bus or truck, and may also be an unmanned vehicle, such as an automated guided vehicle. Of course, the mobile object may also be a mobile object that does not use wheels, such as a hovercraft or a linear motor car that uses magnetic levitation. Each power transmission coil, which uses magnetic coupling to wirelessly transmit alternating current, may be housed within a housing of the power transmission device or may be exposed to the outside. The power transmission coil may be disposed on or buried beneath the floor or road surface on which the mobile object moves, or may be disposed on a wall or ceiling. In the case of the mobile object being a straddle-type monorail, the mobile object may supply and receive power via magnetic coupling within the rail that restricts the movement of the mobile object. The power transmission coil may be disposed in close proximity to the power reception coil, or a relay coil may be placed between the power transmission coil and the power reception coil to supply power. In this case, in the case where the mobile object is equipped with wheels such as tires, a configuration in which relay coils are provided within the tires or wheels may be adopted. In the above embodiments, the plurality of power transmission devices 50 have been described as being switched and performing power supply operations according to the approach of the mobile object 20. In an alternative, the plurality of power transmission devices 50 may be always in power supply operation.

In each of the above embodiments, the control circuit 58 has been described as using the Hall element 57 to detect the position and approach of the mobile object 20. Another circuit configuration may be used as a circuit that operates by receiving DC voltage from the DC power supply unit 260. For example, a circuit that detects the position or approach of the mobile object 20 using a detection coil instead of the Hall element 57, a circuit that detects the position or approach of the mobile object 20 from the current flowing through the power transmission coil 51 or the voltage between the ends of the transmission coil 51, or a circuit that detects the position or approach of the mobile object 20 from the current or voltage across the resonance capacitor 52, etc. may be used. The target to be controlled by the controller circuit 58 is not limited to the impedance circuit 55, but may be any circuit required for each of the power transmission devices 50, as long as it uses the DC voltage. For example, for a circuit to vary the resonance frequency of the resonance circuit, a circuit configuration using a variable capacitor, a series-parallel switching circuit for a capacitor using a capacitor and a switching element, or a switching circuit for the number of turns of a coil using a switching element may be employed. In the above embodiments, the circuit configuration is such that the supply of high-frequency power is turned on and off. Such a circuit may be configured using a relay, a switching element, etc.

(2) In such a configuration, the plurality of power transmission devices may be connected in parallel to the main power lines, and the DC power supply unit may be provided in association with or within each of the plurality of power transmission devices. This can increase the degree of freedom in the arrangement of the plurality of power transmission devices. The DC power supply unit may be installed within the power transmission device, or may be installed in close proximity to and outside the power transmission device. One DC power supply unit may be installed in association with each of the plurality of power transmission devices. In this case, the wiring from the DC power supply unit to each power transmission device is necessary, but the wiring distance and installation man-hours may be reduced as compared to the case of laying power lines to supply power at the second voltage to all the power transmission devices.

(3) In any one of the configurations (1) and (2), DC power lines that are power lines for the DC power supply unit may be connected to the main power lines via an isolation capacitor or capacitors. With this configuration, even if the AC voltage between the main power lines is dissociated from the second voltage output from the DC power supply unit, the DC voltage output from the second power supply unit can be obtained without use of large component, such as a step-down transformer. In addition, inserting insulation capacitors in all connections with the main power lines, facilitates isolation of the DC power supply unit from the main power lines, thereby improving noise resistance.

(4) In any one of the configurations (1) to (3), the main power lines may be single-phase AC lines, and the isolation capacitor may be provided on at least one of the power lines for the DC power supply unit. In this configuration, conversion of the single-phase AC lines to DC may be implemented with a simple configuration.

(5) In any one of the configurations (1) to (4), the DC power supply unit may include, in order from an upstream side of power supply, a rectification section using a diode and a regulated power supply section including a Zener diode and a smoothing capacitor that are both connected in parallel to the DC power lines. With this configuration, a stable DC voltage can be acquired with a simple configuration. The regulated power supply section is not limited to a configuration using a Zener diode, but may instead use a circuit configuration using a transistor or a three-terminal regulator adjusted to a predefined voltage output.

(6) In any one of the configurations (1) to (5), the rectification section may be configured as a half-wave rectifier or a full-wave rectifier. With this configuration, the number of rectification diodes may be reduced, contributing to resource conservation.

(7) In any one of the configurations (1) to (6), the rectification section may include a rectification diode inserted in one of the DC power lines and a reverse protection diode inserted in the other of the DC power lines. With this configuration, backflow may be prevented.

(8) In any one of the configurations (1) to (7), the control within each of the power transmission device, specifically, the control performed by the control circuit 58 illustrated in FIG. 1, may include at least one of the following five controls: [1] power control for turning on and off supply of AC power at the first voltage to the transmission coil; [2] impedance control for varying a resonance state of a resonance circuit using the power transmission coil; [3] detection control for detecting the power reception coil (31) on the mobile object side; [4] drive control for controlling driving of a switching element (SW1) in the power transmission device; and [5] protection control for operating a protection circuit (255) provided in the power transmission device. With this configuration, providing the DC power supply unit may allow for various types of control. There are various controls that can be used to change the resonance state of the resonance circuit, such as controls that change the resonance frequency or controls that change the sharpness of the resonance (Q-value).

(9) In such a configuration, a control unit may further be provided that operates with the second voltage output from the DC power supply unit and performs the control, and when the DC power supply unit starts outputting the second voltage by receiving AC power from the main power lines, the control unit may withhold executing at least part of the control until a predefined operating condition is met. Withholding executing at least part of the control includes, not performing any control until the operating condition is met, not performing at least power transmission control until the operating condition is met, and not performing at least safety control until the operating condition is met, or performing control on the safest side, even if control is performed. For example, in the case of impedance control, performing control on the safest side means controlling the resonance state of the resonance circuit to the side lower than the peak. In the case where the control unit employs a configuration in which an arithmetic and logic operation circuit, such as a microcomputer, is operated by a program, various measures can be taken, such as suspending execution of the program, inhibiting or suppressing output of the result of execution, and so on. In the case where the control unit employs a discrete circuit configuration that performs sequence control, such as a ladder or PLC, part of the sequence may be suspended until the second voltage is established.

(10) In such a configuration, the operating condition may include any one of the following three conditions: <1> a predefined period of time elapses after the second voltage becomes higher than or equal to a predefined first threshold value at or above which the control unit is operable; <2> in a case where the control unit performs at least one of the power control and the impedance control, a first voltage condition and a second voltage condition are both met, the first voltage condition being that the second voltage becomes higher than or equal to a predefined first threshold value at or above which the control unit is operable, the second voltage condition being that the second voltage becomes higher than or equal to a predefined second threshold value at or above which a sensor (157) necessary for the power control and the impedance control is operable, or a predetermined period of time elapses after the second voltage becomes higher than or equal to the first threshold value and the second threshold value; <3> in a case where the control unit performs at least one of the detection control and the protection control, the second voltage becomes higher than or equal to a predefined first threshold value at or above which the control unit is operable, and becomes higher than or equal to a predefined third threshold value at or above which a detection unit (222, 261) necessary for the detection control and the protection control is operable, or a predetermined period of time elapses after the second voltage becomes higher than or equal to the first threshold value and the third threshold value. With this configuration, the reliability of each control may be improved. Other operating conditions may be employed, such as a condition that enabling signals are received from diagnostic devices that are installed over the entire wireless power transfer system and communicates with each of the plurality of power transmission devices, and a condition that the power transmission devices permit each other by communicating with each other and checking each other's operational conditions.

(11) **In** such a configuration, the control unit includes an arithmetic and logic operation circuit that performs the control by executing a program, and the withholding execution of at least part of the control may be implemented by at least one of: (A) suspending execution of the program by the arithmetic and logic operation circuit; (B) inhibiting output based on an operation result of the arithmetic and logic operation circuit; and (C) a gate circuit (267) receiving an output signal from the arithmetic and logic operation circuit and inhibiting output until a permission signal is received.

(12) According to another one of the other embodiments, a wireless power transfer system is provided. This wireless power transfer system includes: a power reception device comprising a power reception coil installed within a mobile object; a plurality of power transmission devices installed in an area of movement of the mobile object and each equipped with a power transmission coil that is magnetically coupled to the power reception coil of the power reception device to thereby wirelessly transmit power to the mobile object; main power lines that supply to the plurality of power transmission devices alternating current (AC) power at a first voltage for use in power transmission to the mobile object; and a direct current (DC) power supply unit that receives the AC power from the main power lines and outputs power at a second voltage that is lower than the first voltage and is used for control within the power transmission devices. This allows the power reception device to be supplied with power wirelessly, which simplifies the supply of the second voltage required for controls on the power transmission device side. As a result, the configuration of the wireless power transfer system can be simplified, and the man-hours required for laying power lines on the power transmission side can be reduced.

(13) In such a configuration, the plurality of power transmission devices may be connected in parallel to the main power lines, and the DC power supply unit may be provided in association with or within each of the plurality of power transmission devices. This can increase the degree of freedom in the arrangement of the plurality of power transmission devices. The DC power supply unit may be installed within the power transmission device, or may be installed in close proximity to and outside the power transmission device. One DC power supply unit may be installed in association with each of the plurality of power transmission devices.

(14) One of the other embodiments is in the form of a wireless power transfer method. This wireless power transfer method may include: supplying alternating current (AC) power at a first voltage to a plurality of power transmission devices in an area of movement of a mobile object via main power lines; a direct current (DC) power supply unit that receives supply of the AC power from the main power lines, outputting power at a second voltage that is lower than the first voltage and is an operating voltage of a control unit within the power transmission devices; at least one of the plurality of power transmission devices, with control of the control unit, using the AC power at the first voltage to supply high frequency AC power to a power transmission coil installed in the at least one of the plurality of power transmission devices; and wirelessly transmitting power via the power transmission coil to a power reception coil of a power reception device of the mobile object. This can eliminate the need to install power lines for the second voltage, which is lower than the first voltage, in addition to the main power lines that supply AC power at the first voltage to the power transmission devices, thereby simplifying the configuration of the wireless power transfer system.

The present disclosure is not limited to any of the embodiments described above but may be implemented by a diversity of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

In the above embodiments and modifications, the control unit and the method thereof described in the present disclosure may be implemented by a special purpose computer which is configured with a memory and a processor programmed to execute one or more particular functions embodied in computer programs of the memory. Alternatively, the control unit and the method thereof described in the present disclosure may be implemented by a dedicated computer configured as a processor with one or more dedicated hardware logic circuits. Alternatively, the control unit and the method thereof described in the present disclosure may be implemented by one or more dedicated computer, which is configured as a combination of a processor and a memory, which are programmed to perform one or more functions, and a processor which is configured with one or more hardware logic circuits. The computer program may be stored on computer-readable non-transitory tangible storage media as instructions to be performed by a computer. The term "computer-readable non-transitory tangible storage media" include not only portable storage media such as a flexible disk and a CD-ROM, but also internal storage devices in a computer such as various RAMs and ROMs, as well as external storage devices such as hard disks that are fixed to the computer. That is, the term "computer-readable non-transitory tangible storage media" have a broad meaning that includes any storage media that may store data packets permanently rather than temporarily.

**Claims**

1. A wireless power transmission system (200) comprising:

   a plurality of power transmission devices (50) installed in an area of movement of a mobile object (20) and each equipped with a power transmission coil (51) that wirelessly transmits power to a power reception device (30) of the mobile object;
   main power lines (RFP) that supply to the plurality of power transmission devices alternating current (AC) power at a first voltage for use in power transmission;
   a direct current (DC) power supply unit (60) that receives the AC power from the main power lines and outputs power at a second voltage that is lower than the first voltage and is used for control within each of the plurality of power transmission devices.

2. The wireless power transmission system according to claim 1, wherein

   the plurality of power transmission devices are connected in parallel to the main power lines, and
   the DC power supply unit is provided in association with or within each of the plurality of power transmission devices.

3. The wireless power transmission system according to claim 1, wherein
   DC power lines (LN1, LN2) that are power lines for the DC power supply unit are connected to the main power lines via an isolation capacitor (CC1, CC2).

4. The wireless power transmission system according to claim 3, wherein
   the main power lines are single-phase AC lines, and the isolation capacitor is provided on at least one of the power lines for the DC power supply unit.

5. The wireless power transmission system according to claim 3, wherein
   the DC power supply unit comprises, in order from an upstream side of power supply, a rectification section (RE) using a diode (RD1) and a regulated power supply section (SP) including a Zener diode (TzD) and a smoothing capacitor (CF) that are both connected in parallel to the DC power lines.

6. The wireless power transmission system according to claim 5, wherein
   the rectification section is configured as a half-wave rectifier or a full-wave rectifier.

7. The wireless power transmission system according to claim 5, wherein
   the rectification section comprises a rectification diode (PD1) inserted in one of the DC power lines and a reverse protection diode (PD2) inserted in the other of the DC power lines.

8. The wireless power transmission system according to any one of claims 1 to 7, wherein
   the control within each of the power transmission device includes at least one of the following five controls:

   [1] power control for turning on and off supply of AC power at the first voltage to the transmission coil;
   [2] impedance control for varying a resonance state of a resonance circuit using the power transmission coil;
   [3] detection control for detecting the power reception coil (31) on the mobile object side;
   [4] drive control for controlling driving of a switching element (SW1) in the power transmission device; and
   [5] protection control for operating a protection circuit (255) provided in the power transmission device.

9. The wireless power transmission system according to claim 8, further comprising

a control unit (158, 265) that operates with the second voltage output from the DC power supply unit and performs the control, wherein when the DC power supply unit starts outputting the second voltage by receiving AC power from the main power lines, the control unit withholds executing at least part of the control until a predefined operating condition is met.

10. The wireless power transmission system according to claim 9, wherein
the operating condition includes any one of the following three conditions:

<1> a predefined period of time elapses after the second voltage becomes higher than or equal to a predefined first threshold value at or above which the control unit is operable;
<2> in a case where the control unit performs at least one of the power control and the impedance control, a first voltage condition and a second voltage condition are both met, the first voltage condition being that the second voltage becomes higher than or equal to a predefined first threshold value at or above which the control unit is operable, the second voltage condition being that the second voltage becomes higher than or equal to a predefined second threshold value at or above which a sensor (157) necessary for the power control and the impedance control is operable, or a predetermined period of time elapses after the second voltage becomes higher than or equal to the first threshold value and the second threshold value;
<3> in a case where the control unit performs at least one of the detection control and the protection control, the second voltage becomes higher than or equal to a predefined first threshold value at or above which the control unit is operable, and becomes higher than or equal to a predefined third threshold value at or above which a detection unit (222, 261) necessary for the detection control and the protection control is operable, or a predetermined period of time elapses after the second voltage becomes higher than or equal to the first threshold value and the third threshold value.

11. The wireless power transmission system according to claim 9, wherein

the control unit comprises an arithmetic and logic operation circuit that performs the control by executing a program, and
the withholding execution of at least part of the control is implemented by at least one of:

(A) suspending execution of the program by the arithmetic and logic operation circuit;
(B) inhibiting output based on an operation result of the arithmetic and logic operation circuit; and
(C) a gate circuit (267) receiving an output signal from the arithmetic and logic operation circuit and inhibiting output until a permission signal is received.

12. A wireless power transfer system (100) comprising:

a power reception device comprising a power reception coil installed within a mobile object;
a plurality of power transmission devices installed in an area of movement of the mobile object and each equipped with a power transmission coil that is magnetically coupled to the power reception coil of the power reception device to thereby wirelessly transmit power to the mobile object;
main power lines that supply to the plurality of power transmission devices alternating current (AC) power at a first voltage for use in power transmission to the mobile object; and
a direct current (DC) power supply unit that receives the AC power from the main power lines and outputs power at a second voltage that is lower than the first voltage and is used for control within the power transmission devices.

13. The wireless power transfer system according to claim 12, wherein

the plurality of power transmission devices are connected in parallel to the main power lines, and
the DC power supply unit is provided in association with or within each of the plurality of power transmission devices.

14. A wireless power transfer method comprising:

supplying alternating current (AC) power at a first voltage to a plurality of power transmission devices in an area of movement of a mobile object via main power lines;
a direct current (DC) power supply unit that receives supply of the AC power from the main power lines, outputting power at a second voltage that is lower than the first voltage and is an operating voltage of a control unit (58) within the power transmission devices;
at least one of the plurality of power transmission devices, under control of the control unit, using the AC power at the first voltage to supply high frequency AC power to a power transmission coil installed in the at least one of the plurality of power transmission devices; and

wirelessly transmitting power via the power transmission coil to a power reception coil of a power reception device of the mobile object.

# FIG.1

# FIG.2

# FIG.3

# FIG.4

# FIG.5A

# FIG.5B

# FIG.6

-42A, 60A

CC1 · LN1 · PD1 · RD1 · PD2 · RE · TzD · CF · SP · DCP · ACP · CC2 · LN2

# FIG.7

-42B, 60B

CC1 · LN1 · PD1 · RD1 · TzD · CF · DCP · ACP · CC2 · LN2

# FIG.8

# FIG.9

# FIG.10

FIRST POWER SUPPLY UNIT

RC1

RC2

L1  L3

L2  L4

CI

SECOND POWER SUPPLY UNIT

30A

# FIG.11

# FIG.12

# FIG.13

# FIG.14

EP 4 542 825 A1

# FIG.15

32

# FIG.16

# FIG.17

POWER-ON
PROCESSING ROUTINE

UPON POWER ON: $V_{cc} > V_{on}$

ACTIVATE CONTROLLER IN
CONTROL CIRCUIT — S101

TURN ON OUTPUT MASK — S111

ACTIVATE TIMER COUNTER — S121

S131

NO ← TCC > Thc ?

YES

REST TIMER COUNTER — S141

TURN OFF OUTPUT MASK — S151

NEXT

# FIG.18

# FIG.19

POWER-ON
PROCESSING ROUTINE

UPON POWER ON: $V_{cc} > V_{on}$

ACTIVATE CONTROLLER IN
CONTROL CIRCUIT — S201

TURN ON OUTPUT MASK — S211

ACQUIRE DRIVE VOLTAGE V1
ACQUIRE DRIVE VOLTAGE V2 — S221

S231

$V1 > V_a$ ?
$V2 > V_b$ ?

NO

YES

TURN OFF OUTPUT MASK — S241

NEXT

# FIG.20

# FIG.21

# FIG.22

EXAMPLE OF NEGATIVE VOLTAGE OUTPUT CIRCUIT CORRESPONDING TO
FIRST EXAMPLE OF CONFIGURATION (FIG. 6) OF FIRST EMBODIMENT

EXAMPLE OF NEGATIVE VOLTAGE OUTPUT CIRCUIT CORRESPONDING TO
SECOND EXAMPLE OF CONFIGURATION (FIG. 7) OF FIRST EMBODIMENT

EXAMPLE OF NEGATIVE VOLTAGE OUTPUT CIRCUIT CORRESPONDING TO
THIRD EXAMPLE OF CONFIGURATION (FIG. 8) OF FIRST EMBODIMENT

# FIG.23

FIRST EXAMPLE OF CIRCUIT CONFIGURATION CAPABLE OF OUTPUTTING POSITIVE AND NEGATIVE VOLTAGES (DC SIDE GND IS COMMON TO AC SIDE P OR N LINE)

SECOND EXAMPLE OF CIRCUIT CONFIGURATION CAPABLE OF OUTPUTTING POSITIVE AND NEGATIVE VOLTAGES (DC SIDE GND IS FLOATING)

**INTERNATIONAL SEARCH REPORT**

| International application No. |
| --- |
| **PCT/JP2023/018268** |

**A.    CLASSIFICATION OF SUBJECT MATTER**

*H02J 50/40*(2016.01)i; *B60L 5/00*(2006.01)i; *B60L 53/122*(2019.01)i; *B60M 7/00*(2006.01)i; *H02J 7/00*(2006.01)i; *H02J 50/12*(2016.01)i; *H02J 50/90*(2016.01)i

FI:    H02J50/40; H02J50/12; B60M7/00 X; B60L53/122; B60L5/00 B; H02J50/90; H02J7/00 P; H02J7/00 301D

According to International Patent Classification (IPC) or to both national classification and IPC

**B.    FIELDS SEARCHED**

Minimum documentation searched (classification system followed by classification symbols)

H02J50/40; B60L5/00; B60L53/122; B60M7/00; H02J7/00; H02J50/12; H02J50/90

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2020-195176 A (DENSO CORP.) 03 December 2020 (2020-12-03) paragraphs [0001]-[0050], fig. 1-6 | 1-2, 8, 12-14 |
| A | | 3-7, 9-11 |
| Y | JP 2018-196290 A (MINEBEAMITSUMI INC.) 06 December 2018 (2018-12-06) paragraphs [0037]-[0043], fig. 3 | 1-2, 8, 12-14 |
| A | | 3-7, 9-11 |
| A | JP 2020-137339 A (SOKEN INC.) 31 August 2020 (2020-08-31) entire text, all drawings | 1-14 |
| P, A | JP 2023-041422 A (SHINDENGEN ELECTRIC MFG. CO., LTD.) 24 March 2023 (2023-03-24) paragraphs [0017]-[0018], fig. 13 | 1-14 |

☐ Further documents are listed in the continuation of Box C.          ☑ See patent family annex.

| | |
| --- | --- |
| \*    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **01 August 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/018268**

| Patent document cited in search report | | | Publication date (day/month/year) | Patent family member(s) | | | Publication date (day/month/year) |
|---|---|---|---|---|---|---|---|
| JP | 2020-195176 | A | 03 December 2020 | US paragraphs [0001]-[0058], fig. 1-6 WO EP CN | 2022/0085658 2020/241405 3979463 113892224 | A1 A1 A1 A | |
| JP | 2018-196290 | A | 06 December 2018 | US paragraphs [0080]-[0089], fig. 3 | 2018/0316391 | A1 | |
| JP | 2020-137339 | A | 31 August 2020 | US entire text, all drawings WO | 2021/0384774 2020/170884 | A1 A1 | |
| JP | 2023-041422 | A | 24 March 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022099079 A
- JP 2023069851 A

- JP 2017051074 A